# EUROPÄISCHE PATENTSCHRIFT

(11) **EP 2 156 973 B1**
(45) Veröffentlichungstag und Bekanntmachung des Hinweises auf die Patenterteilung: **25.12.2013**
(21) Anmeldenummer: 09010222.9
(22) Anmeldetag: 07.08.2009
(51) Int. Cl.: B60J 7/06, B60J 7/12

(54) **Dach für einen Personenkraftwagen**
Roof for a passenger vehicle
Toit pour un véhicule de transport de passagers

(30) Priorität: 21.08.2008 DE 102008039094
(43) Veröffentlichungstag der Anmeldung: 24.02.2010
(73) Patentinhaber: Magna Car Top Systems GmbH, 74321 Bietigheim-Bissingen (DE)
(72) Erfinder: Schumacher, Thorsten, 25495 Kummerfeld (DE); Reichel, Johannes, 71254 Ditzingen (DE); Klausmann, Michaela, 71522 Backnang (DE)
(74) Vertreter: Völger, Silke Beatrix

(56) Entgegenhaltungen:
- EP-A2- 0 336 414
- DE-A1- 4 039 583
- DE-C- 807 474
- JP-A- 3 279 016
- US-A- 3 658 378

## Beschreibung

Die Erfindung bezieht sich auf ein Dach für einen Personenkraftwagen mit Dachseitenrahmen umfassenden Seitenwänden eines Aufbaus, welches Dach ein zwischen einer Schließstellung und einer Offenstellung bewegliches Faltverdeck beinhaltet.

Es ist ein Aufbau für einen Personenkraftwagen bekannt, US 3,658,378, der ein Dach mit einer Dachöffnung umfasst. Die Dachöffnung ist mit einem Faltverdeck abgedeckt, das aus einer Schließstellung in eine Offenstellung und vice versa bewegbar ist. Das Faltverdeck wird durch einen flexiblen Verdeckbezug und Führungsspriegel und Faltspriegel gebildet, die mit dem Verdeckbezug zusammenwirken. Die Führungsspriegel sind unter Vermittlung von Führungsgliedern an in Fahrzeuglängsrichtung verlaufenden Schiebeschienen von seitlichen Dachrahmen angeordnet, die Bestandteil von Seitenwänden des Aufbaus sind. Führungsspriegel und Faltspriegel weisen ein Hohlprofil mit viereckigem Querschnitt auf, das von den Führungsgliedern getragen wird. Zwischen Führungsspriegel und Faltspriegel sind Federstäbe vorgesehen, und zwar in der Weise, dass die Faltspriegel in der Offenstellung des Faltverdecks zur Faltenbildung des Verdeckbezugs aus einer abgesenkten Position in eine angehoben Position verstellt sind. Die Federstäbe sind in den Führungsgliedern der Führungsspriegel bzw. den Faltspriegeln befestigt.

Die DE 807 474 gibt ein Faltschiebdach für Personenautos wieder, das in einen Aufbau integriert ist, und es weist einen Außenstoff, Hilfsspriegel und Faltspriegel auf. Die Hilfsspriegel und die Faltspriegel erstrecken sich quer zur Fahrzeuglängsrichtung und sind mittels in Fahrzeuglängsrichtung ausgerichteten Federn zusammengesetzt. Die Federn sind an den rohrförmigen einen elliptischen Querschnitt aufweisenden Hilfsspriegeln und an den Faltspriegeln in Lage gehalten. Die Faltspriegel werden beim Öffnen des Faltschiebedachs über die Federn nach oben bewegt, wodurch der Außenstoff definiert in Falten gelegt wird. Darüber hinaus wird ein Innenstoff -auch Himmel genannt- des Faltschiebdachs unter Zwischenschaltung von Schlaufen von den Faltspriegeln getragen.

In der EP 0 336 414 A2 ist zudem ein Faltverdeck bekannt, dass benachbarte Führungsspriegel und Faltspriegel aufweist, die mittels eines Federelements miteinander verbunden sind, das einerseits mit einem zugehörigen Führungsspriegel und andererseits mit Hilfe eines Armes mit dem benachbarten Faltspriegel verbunden ist. Die jeweiligen Spriegel umfassen zudem Endstücke, die drehfest in hohle Abschnitte des zugehörigen Spriegels angeordnet sind.

Es ist Aufgabe der Erfindung an einem Dach eines Personenkraftwagens ein bewegliches Faltverdeck vorzusehen, das unter Einsatz von Verdeckbezug, Führungsspriegeln, Faltspriegeln und Federelementen sich bei einfacher Herstellung und Montage durch gute Funktion auszeichnet.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Führungsspriegel und Faltspriegel ebenso die Federelemente und die Endstücke konstruktiv trefflich umsetzbar und mit relativ geringem Aufwand herstellbar sind. Dabei lassen sich die Endstücke und die Federelemente über die Aufnahmen ohne weiteres zusammensetzen und dann in die Führungsspriegel und die Faltspriegel einführen. Die ersten und zweiten Endstücke stellen einfach zu fertigende Bauteile aus Kunststoff, Metall oder dgl. dar, in die jeweils musterhaft ein Einschubabschnitt und eine Aufnahme in Form einer Schlitzdurchgangsöffnung integrierbar ist. Dank der Schlitzdurchgangsöffnungen in den Endstücken und der Erweiterungen an den Enden der Blattfedern werden letztere allein durch Formschluss gehalten, so dass zusätzlich Befestigungsmittel wie Schrauben entfallen können.

Weitere Vorteile ergeben sich dadurch, dass die in das Faltverdeck des Personenkraftwagens eingebauten Führungsspriegel und Faltspriegel aus Blech gestalteten Trägern in Gestalt von Hohlprofilen bestehen, die bei relativ geringem Gewicht bspw., weil aus Leichtmetall- oder dünnwandigem, auch hochfestem Stahlblech bestehend, sich durch gezielte Festigkeit auszeichnen. Hervorzuheben sind aber auch die günstigen Produktionsmöglichkeiten der Führungsspriegel und der Faltspriegel, namentlich dann, wenn sie durch Rollbiegen gefertigt werden. Beispiel gebend in jeden Träger eingearbeitet sind die Aufnahmen für die Haltemittel des Verdeckbezugs und der Innenverkleidung, welche Aufnahmen aus einem Stück mit dem Träger gefertigt sind. Die Aufnahmen können durch entsprechende Formgebungen zur Festigkeitsoptimierung des Trägers herangezogen werden. Schließlich lassen sich die Haltemittel auf einfache Art und Weise mit den Aufnahmen verbinden, was zur Fertigungsvereinfachung beiträgt.

In der Zeichnung wird ein Ausführungsbeispiel der Erfindung gezeigt, das nachstehend näher beschrieben wird.

Es zeigen
Fig. 1 eine Schrägansicht von vorne rechts oben auf einen Personenkraftwagen mit einem erfindungsgemäßen Faltverdeck, teilweise im Schnitt,
Fig. 2 eine Schrägansicht von vorne links oben auf Einzelheiten des Faltverdecks,
Fig, 4 eine Ansicht in Pfeilrichtung A der Fig. 1 in größerem Maßstab,
Fig. 3 eine Schrägansicht von vorne rechts oben auf Einzelheiten des Faltverdecks.

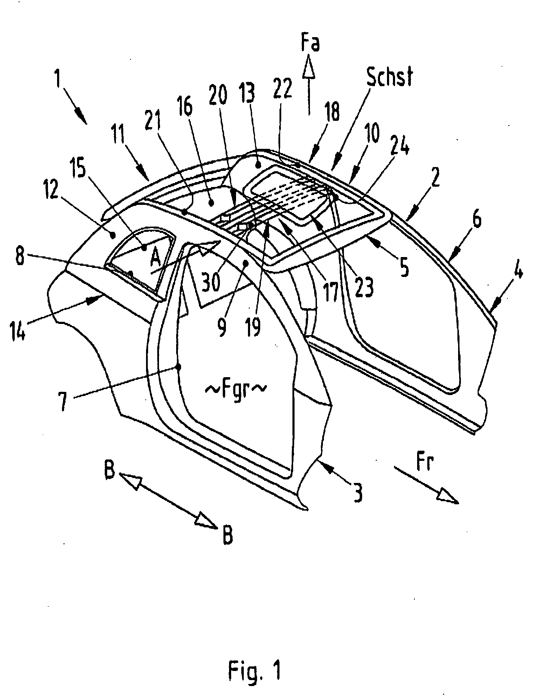

Von einem Personenkraftwagen 1 -Fig. 1- ist lediglich ein Aufbau 2 mit gegenüberliegenden Seitenwänden 3 und 4 und einem oberen Querträger 5 eines Windschutzscheibenrahmens 6 dargestellt. Die je eine Türöffnung 7 und eine Fensteröffnung 8 aufweisenden Seitenwände 3 und 4, die aufrecht stehen und fest mit dem Aufbau 2 verbunden sind, umfassen Dachseitenrahmen 9 und 10, die in einem rückwärtigen Bereich 11 des Aufbaus 2 in Säulen 12 und 13 übergehen und auf eine etwa horizontal verlaufende Gürtellinie 14 des besagten Aufbaus stoßen. Die Dachseitenrahmen 9 und 10, der vordere Querträger 5 und ein benachbart der Gürtellinie 14 verlaufendes hinteres Querteil 15 des Aufbaus 2 begrenzen eine relativ große Dachöffnung 16, in der ein bewegliches Dach 17 in Fahrzeuglängsrichtung B-B verschiebbar angeordnet ist; die Fahrtrichtung ist mit Fr bezeichnet.

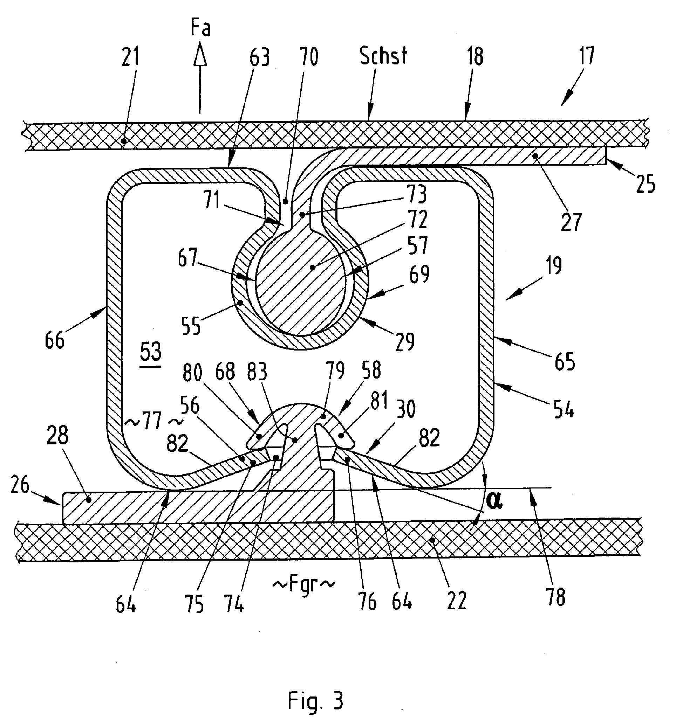

Das Dach 17 ist nach Art eines Faltverdecks 18 aufgebaut, wie bspw. in der US 3,658,378 und DE 807 474 beschrieben und zwischen einer Schließstellung Schst und Offenstellung -nicht gezeigt- und vice versa bewegbar. In der Offenstellung des Faltverdecks 18 ist letzteres In Falten gelegt, weshalb besagtes Faltverdeck 18 eine Anzahl quer zur Fahrzeuglängsrichtung B-B verlaufender mit Abstand zueinander angeordneter Führungsspriegel 19 und Faltspriegel 20, beide stangenartig, aufweist. Die Führungsspriegel 19 sind in Führungsschienen 21 und 22 der Dachseitenrahmen 9 und 10 angeordnet und arbeiten mit einem zur Fahrzeugaußenseite Fa hin weisenden Verdeckbezug 23 sowie einer zum Fahrgastraum Fgr zeigende Innenverkleidung 24 -auch Innenhimmel bezeichnet- zusammen. Zwischen Verdeckbezug 23 und Innenverkleidung 24, beide bestehen aus flexiblem Material, erstrecken sich die Führungsspriegel 19 und Faltspriegel 20 -Fig. 3-. Und an den Führungsspriegeln 19 und den Faltspriegeln 20 sind der Verdeckbezug 23 und die Innenverkleidung 24 unter Zwischenschaltung von Haltemitteln 25 und 26 gehalten. Die Haltemittel 25 und 26 sind mittels flanschartiger Abschnitte 27 und 28 mit dem Verdeckbezug 23 bzw. der Innenverkleidung 24 durch Nähen, Kleben oder dgl. verbunden. Diese Haltemittel 25 und 26 sind in ersten Aufnahmen 29 und zweiten Aufnahmen 30 der Führungsspriegel 19 und Faltspriegel 20 gehalten,

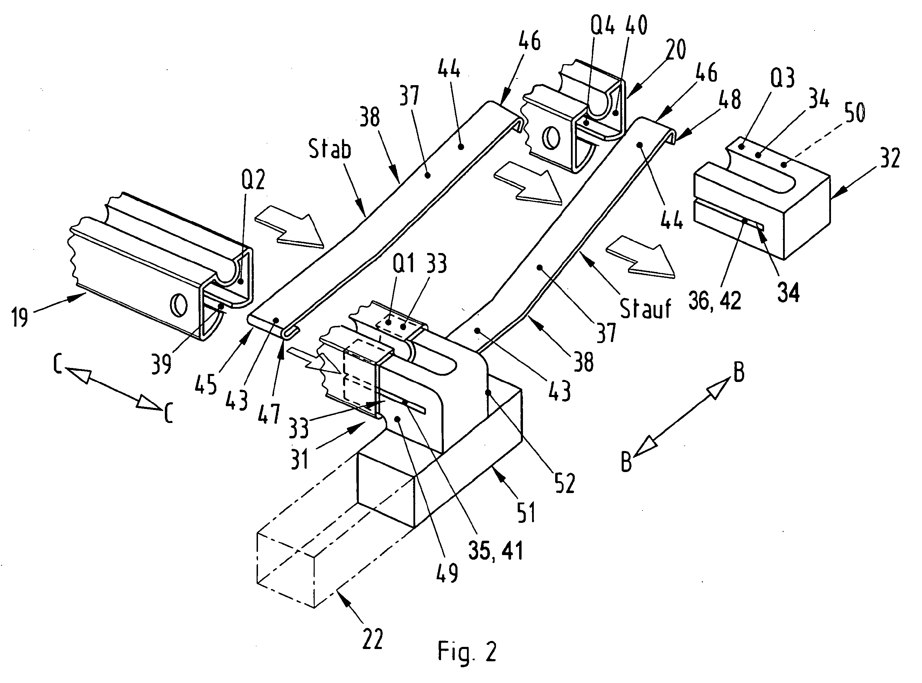

Jeder Führungsspriegel 19 und jeder Faltspriegel 20 ist an beiden Enden jeweils mit einem ersten Endstück 31 bzw. einem zweiten Endstück 32 versehen -Fig. 2-, die in Längsrichtung C-C des Führungsspriegels 19 und des Faltspriegels 20 betrachtet über die zuletzt genannten abschnittsweise hinausragen, aus Kunststoff, Metall oder dgl. bestehen und Einschubabschnitte 33 und 34 sowie dritte Aufnahmen 35 und vierte Aufnahmen 36 für ein als Blattfeder 37 ausgeführtes Federelement 38 besitzen, das zum Bewegen des Faltspriegel 20 aus einer abgesenkten Stellung Stab - entspricht Schließstellung des Faltverdecks 18- in eine aufgestellte Stellung Stau - entspricht Offenstellung des Faltverdecks 18 - dient. Die Einschubabschnitte 33 und 34 der ersten und zweiten Endstücke 31 und 32 werden in hohle Abschnitte 39 und 40 eingebracht, wofür der Führungsspriegel 19 und der Faltspriegel 20 und die Einschubabschnitte 33 und 34 korrespondierende Querschnitt Q1 und Q2 bzw. Q3 und Q4 aufweisen. Im Ausführungsbeispiel sind die Querschnitte Q1 und Q2 bzw. Q3 und Q4 quadratisch gestaltet; denkbar ist aber auch, sie rechteckig, kreisförmig, elliptisch oder dgl. auszubilden.

Die dritten und vierten Aufnahmen 35 und 36 in den ersten und zweiten Endstücke 31 und 32 für den Führungsspriegel 19 und Faltspriegel 20 werden durch Schlitzdurchgangsöffnungen 41 und 42 gebildet, die etwa horizontal verlaufen und Lagerabschnitte 43 und 44 der Blattfeder 37 aufnehmen, anders ausgedrückt, die Blattfeder 37 durchdringt mit den Lagerabschnitten 43 und 44 die Schlitzdurchgangöffnungen 41 und 42 in Fahrzeuglängsrichtung B-B gesehen. An Enden 45 und 46 der Blattfeder 37 sind Erweiterungen 47 und 48 angeformt, die als Axialsicherung an Stützwänden 49 und 50 der Endstücke 31 und 32 anliegen. Führungsspriegel 19, Faltsprisgel 20, Blattfeder 35 und die Endstücke 31 und 32 sind aufgrund ihrer Konzeption im Wesentlichen ausschließlich über Formschlussverbindungen zusammengesetzt, so dass zusätzliche Haltemittel, z.B. Schrauben, entfallen können.

Das erste Endstück 31 für den Führungsspriegel 19 ist mit einem Führungskörper 51 versehen, der längsverschiebbar in der Führungsschiene 22 -in Fig. 2 lediglich schematisch dargestellt- angeordnet ist. Der in Fahrzeuglängsrichtung B-B ausgerichtete Führungskörper 51 ist unterhalb eines den Einschubabschnitt 33 umfassenden Querteils 52 des Endstücks 31 vorgesehen. Der Führungskörper 51 und das Querteil 52 mit Einschubabschnitt 33 des Endstücks 31 sind aus einem Stück hergestellt. Sinngemäß trifft dies auch für das zweite Endstück 31 zu.

Zum Einbau der Blattfeder 37 und der Endstücke 31 und 32 in den Führungspriegel 19 und den Faltspriegel 20 wird besagte Blattfeder 37 zunächst in die Schlitzdurchgangsöffnungen 41 und 42 der ersten und zweiten Endstücke 31 und 32 eingesetzt. Die so vormontierte Baueinheit wird dann über die Einschubabschnitte 33 und 34 mit dem Führungsspriegel 19 und dem Faltspriegel 20 verbunden.

Der Faltspriegel 19, der dem Führungsspriegel 20 bezüglich Querschnittsgestaltung und Herstellung weitgehend entspricht, wird durch einen aus Blech geformten im Querschnitt ein Hohlprofil 53 aufweisenden Träger 54 gebildet. In diesen Träger 54 sind die als erste und zweite Formabschnitte 55 und 56 ausgebildeten ersten und zweiten Aufnahmen 29 und 30 zur Festlegung der Haltemittel 25 und 26 des Verdeckbezugs 21 und der Innenverkleidung 22 eingearbeitet. Das Blech des Trägers 54 kann aus Feinblech (Dicke > 3 mm) bestehen, wobei sich als Werkstoff Stahl - auch hochfester Gattung-, Leichtmetall oder dgl. eignen. Im Ausführungsbeispiel sind beide ersten und zweiten Aufnahmen 29 und 30 aus einem Stück mit dem Träger 54 hergestellt. Dabei sind diese Aufnahmen 29 und 30 und freie Endbereiche 57 und 58 der Haltemittel 25 und 26 so gestaltet, dass der Verdeckbezug 21 und die Innenverkleidung 22 in den zuletzt genannten Aufnahmen formschlüssig in Lage gehalten werden. Der Träger 54 mit den Aufnahmen 29 und 30 bzw. Formabschnitten 55 und 56 wird im Ausführungsbeispiel durch Rollbiegen auf Blechprofiliermaschinen -DD 51 286- hergestellt, das eine Sonderform des Schwenkbiegens ist.

Der Querschnitt des Trägers 54 ist -im Querschnitt betrachtet-, wie bereits beschrieben, quadratisch mit gegenüberliegenden horizontalen Wänden 63 und 64 sowie aufrechten Wänden 65 und 66. In der horizontalen Wand 63, die sich benachbart des Verdeckbezugs 21 erstreckt, ist die erste Aufnahme 29 vorgesehen; in der horizontale Wand 64 die zweite Aufnahme 30. An den Endbereichen 57 und 58 der Haltemittel 25 und 26 sind Erweiterungen 67 und 68 angebracht, die sich in den ersten und zweiten Aufnahmen 29 und 30 abstützen. Die erste Aufnahme 29 weist einen ringförmigen Querschnitt 69 mit einer eine Durchgangsöffnung 70 umfassenden Verengung 71 auf. In dem Querschnitt 69 ist die Erweiterung 67 angeordnet, die eine im Querschnitt kreisförmige Verdickung 72 besitzt, und durch die Durchgangsöffnung 70 ist ein Haltemittelabschnitt 73 des Haltemittels 25 hindurchgeführt. Haltemittel 25 und Verdeckbezug 21 können so ausgelegt sein, dass sie in der Schließstellung Schst des Faltverdecks 18 auf der horizontalen Wand 63 aufliegen. Die Erweiterung 67 bzw. im Querschnitt kreisförmige Verdickung 72 wird durch Bewegen -manuell und/oder maschinell- des Haltemittels 25 des Verdeckbezugs 21 in Längsrichtung C-C -Fig. 3- des Trägers 54 in die erste Aufnahme 29 eingeführt und in ihre konstruktiv festgelegte Endlage bewegt.

Die zweite Aufnahme 30 besitzt eine schlitzartige Durchgangsöffnung 74 in der horizontalen der Innenverkleidung 22 zugekehrten horizontalen Wand 64 des Trägers 54. wodurch sich von den aufrechten Wänden 65 und 66 weggeführt einander zugekehrte Schenkel 75 und 76 ergeben. Diese Schenkel 75 und 76 sind zu einem innenraum 77 des Trägers 54 hin abgewinkelt, und zwar unter Einschluss eines spitzen Winkels a zu einer Horizontalen 78 der Wand 64. An den Schenkeln 75 und 76 stützt sich die zweite Erweiterung 68 des zweiten Haltemittels 26 ab, die in etwa mit einem pilzförmigen Querschnitt 79 versehen ist. Letzterer verfügt über Stützwangen 80 und 81, die eine Innenseite 82 der Schenkel 75 und 76 hintergreifen. Während die zweite Erweiterung 68 sich an den Schenkeln 75 und 76 abstützt, durchdringt ein Haltemittelabschnitt 83 des zweiten Haltemittels 26 die Durchgangsöffnung 74 zwischen besagten Schenkeln 75 und 76. Die zweite Erweiterung 68 bzw. der pilzförmige Querschnitt 79 ist durch Bewegen des zweiten Haltemittels 26 in Längsrichtung C-C des Trägers 54 bzw. durch Einklipsen über die schlitzartige Durchgangsöffnung 74 in die zweite Aufnahme 30 einbringbar.

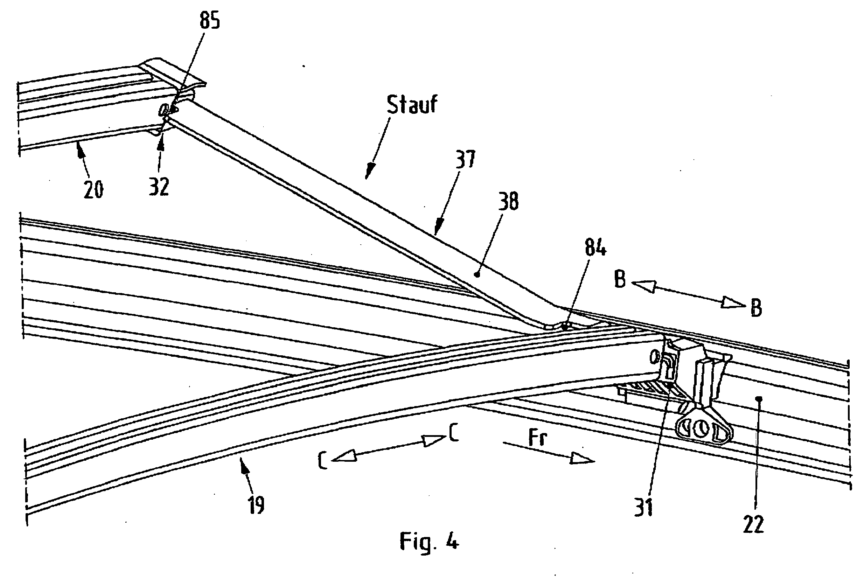

In Fig. 4 wird gezeigt, wie der Führungsspriegel 19 mit dem ersten Endstück 31 bzw. dem Führungskörper 51 in der Führungsschiene 22 angeordnet ist. Dabei verbindet die Blattfeder 37 die Endstücke 31 und 32 bzw. den Führungsspriegel 19 und den Faltspriegel 20 miteinander. Schließlich ist die Blattfeder 37 zwischen Führungsspriegel 19 und Faltspriegel 20, und zwar benachbart von letzteren mit ersten und zweiten Ausschnitten 84 und 85 versehen, so dass jeweils lediglich ein Teil der Breite der Blattfeder 37 in den Endstücken 31 und 32 des Führungsspriegels 19 und des Faltspriegels 20 in Lage gehalten wird.

## Patentansprüche

1. Dach (17) für einen Personenkraftwagen (1) mit Dachseitenrahmen (9, 10) umfassenden Seitenwänden (3,4) eines Aufbaus, welches Dach ein zwischen einer Schließstellung und einer Offenstellung bewegliches Faltverdeck (18) beinhaltet, das einen mit quer zur Fahrzeuglängsrichtung (8-8) verlaufenden Führungsspriegeln (19) und Faltspriegeln (20) verbundenen Verdeckbezug (23) besitzt, wobei die Führungsspriegel (19) in Führungsschienen (21, 22) der Dachseitenträger verschiebbar sind und zwischen benachbarten hohle Abschnitte (39, 40) aufweisenden Führungsspriegeln (19) und Faltspriegeln (20) jeweils zur Faltenbildung des Verdeckbezugs (23) dienende Federelemente (3) vorgesehen sind wobei jeder Führungsspriegel (19) und jeder Faltspriegel (20) mit ersten Endstücken (31) und zweiten Endstücken (32) versehen ist, und wobei
die Federelemente (38) in Aufnahmen (35, 36) des entsprechenden Führungsspriegels (19) sowie Faltspriegels (20) in Lage gehalten werden, und die ersten Endstücke (31) und die zweiten Endstücke (32), Einschubabschnitte (33 und 34) und die Aufnahmen (35 und 36) für die den Führungsspriegel (19) und den Faltspriegel (20) verbindenden Federelemente (38) aufweisen, **dadurch gekennzeichnet,**
- **dass** die Aufnahmen (35, 36) für das Federelement (3) durch Schlitzdurchgangsöffnungen (41 und 42) gebildet werden, in die Lagerabschnitte (43 und 44) der als Blattfedern (37) dargestellten Federelemente (38) eingeführt sind.

2. Dach nach Anspruch 1, **dadurch gekennzeichnet, dass** die Einschubabschnitte (33 und 34) der Endstücke (31 und 32) in die hohlen Abschnitte (39 und 40) des Führungsspriegels (19) und des Faltspriegels (20) eingebracht sind.

3. Dach nach Anspruch 1 oder 2, **dadurch gekennzeichnet, dass** die hohlen Abschnitte (39 und 40) des Führungsspriegels (19) und des Faltspriegels (20) und die Einschubabschnitte (33 und 34) der Endstücke (31 und 32) korrespondierende Querschnitte (Q1, Q2, Q3 und Q4) aufweisen.

4. Dach nach einem der Ansprüche 1 bis 3, **dadurch gekennzeichnet, dass** die hohlen Abschnitte (39 und 40) des Führungsspriegels (19) und des Faltspriegels (20) von rechteckiger, z.B. quadratischer, Gestalt sind.

5. Dach nach Anspruch 1, **dadurch gekennzeichnet, dass** Enden (45 und 46) einer jeden Blattfeder (37) mit Erweiterungen (47 und 48) versehen sind, die sich an den Endstücken (31 und 32) abstützen.

6. Dach nach einem der Ansprüche 1 bis 5, **dadurch gekennzeichnet, dass** das erste Endstück (31) des Führungsspriegels (19) mit einem Führungskörper (51) versehen ist, der in der benachbarten Führungsschiene (22) im Dachseitenrahmen (10) wirksam ist.

7. Dach nach einem oder mehreren der vorangehenden Ansprüche, **dadurch gekennzeichnet, dass** der Einschubabschnitt (33) und der Führungskörper (51) des ersten Endstücks (31) aus einem Stück hergestellt sind.

8. Dach nach einem oder mehreren der vorangehenden Ansprüche, **dadurch gekennzeichnet, dass** das erste Endstück (31) und das zweite Endstück (32) aus Kunststoff, Metall oder dgl. hergestellt sind.

9. Dach nach einem oder mehreren der vorangehenden Ansprüche, **dadurch gekennzeichnet, dass** zum Einbau der Blattfeder (37) und der Endstücke (31 und 32) in den Führungsspriegel (19) und den Faltspriegel (20) besagte Blattfeder (39) zunächst in die Schlitzdurchgangsöffnungen (41 und 42) der Endstücke (31 und 32) des Führungsspriegels (19) und des Faltspriegels (20) eingeführt wird und danach die Einschubabschnitte (41 und 42) in den Führungsspriegel (19) und den Faltspriegel (20) eingesetzt werden.

10. Dach nach einem oder mehreren der vorangehenden Ansprüche, **dadurch gekennzeichnet, dass** der Führungsspriegel (19) und der Faltspriegel (20) aus Stahl, Leichtmetall oder dgl. hergestellt sind.

## Claims

1. Roof (17) for a passenger vehicle (1) having side walls (3, 4) of a superstructure which comprise roof side frames (9, 10), which roof comprises a folding top (18) which can be moved between a closed position and an open position and has a hood covering (23) which is connected to folding bows (20) and guide bows (19) which run transversely with respect to the vehicle longitudinal direction (8-8), the guide bows (19) being displaceable in guide rails (21, 22) of the roof side carriers, and spring elements (38) which serve in each case for fold formation of the hood covering (23) being provided between adjacent folding bows (20) and guide bows (19) which have hollow sections (39, 40), each guide bow (19) and each folding bow (20) being provided with first end pieces (31) and second end pieces (32), and the spring elements (38) being held in position in receptacles (35, 36) of the corresponding guide bow (19) and folding bow (20), and the first end pieces (31) and the second end pieces (32) having push-in sections (33 and 34) and the receptacles (35 and 36) for the spring elements (38) which connect the guide bow (19) and the folding bow (20), **characterized**
- **in that** the receptacles (35, 36) for the spring element (38) are formed by slot passage openings (41 and 42), into which bearing sections (43 and 44) of the spring elements (38) which are shown as leaf springs (37) are inserted.

2. Roof according to Claim 1, **characterized in that** the push-in sections (33 and 34) of the end pieces (31 and 32) are introduced into the hollow sections (39 and 40) of the guide bow (19) and of the folding bow (20).

3. Roof according to Claim 1 or 2, **characterized in that** the hollow sections (39 and 40) of the guide bow (19) and of the folding bow (20) and the push-in sections (33 and 34) of the end pieces (31 and 32) have corresponding cross sections (Q1, Q2, Q3 and Q4).

4. Roof according to one of Claims 1 to 3, **characterized in that** the hollow sections (39 and 40) of the guide bow (19) and of the folding bow (20) are of rectangular, for example square, design.

5. Roof according to Claim 1, **characterized in that** ends (45 and 46) of each leaf spring (37) are provided with widened portions (47 and 48) which are supported on the end pieces (31 and 32).

6. Roof according to one of Claims 1 to 5, **characterized in that** the first end piece (31) of the guide bow (19) is provided with a guide body (51) which is active in the adjacent guide rail (22) in the roof side frame (10).

7. Roof according to one or more of the preceding claims, **characterized in that** the push-in section (33) and the guide body (51) of the first end piece (31) are produced from one piece.

8. Roof according to one or more of the preceding claims, **characterized in that** the first end piece (31) and the second end piece (32) are produced from plastic, metal or the like.

9. Rocf according to one or more of the preceding claims, **characterized in that**, for the installation of the leaf spring (37) and the end pieces (31 and 32) into the guide bow (19) and the folding bow (20), said leaf spring (37) is first of all inserted into the slot passage openings (41 and 42) of the end pieces (31 and 32) of the guide bow (19) and of the folding bow (20), and afterwards the push-in sections (41 and 42) are inserted into the guide bow (19) and the folding bow (20).

10. Roof according to one or more of the preceding claims, **characterized in that** the guide bow (19) and the folding bow (20) are produced from steel, aluminium alloy or the like.

## Revendications

1. Toit (17) pour un véhicule de transport de passagers (1), comprenant des parois latérales (3, 4) d'une carrosserie qui comportent des cadres latéraux de toit (9, 10), lequel toit comprend une capote pliante (18) mobile entre une position de fermeture et une position d'ouverture, laquelle capote pliante possède un revêtement de capote (23) relié à des arceaux de guidage (19) et des arceaux pliants (20) s'étendant transversalement par rapport à la direction longitudinale du véhicule (8-8), les arceaux de guidage (19) pouvant être déplacés dans des rails de guidage (21, 22) des longerons latéraux de toit, et des éléments de ressort (38) servant à la formation des plis du revêtement de capote (23) étant respectivement prévus entre des arceaux de guidage (19) et des arceaux pliants (20) adjacents comprenant des sections creuses (39, 40), chaque arceau de guidage (19) et chaque arceau pliant (20) étant pourvu de premiers embouts (31) et de deuxièmes embouts (32), et
les éléments de ressort (38) étant maintenus en position dans des logements (35, 36) de l'arceau de guidage (19) et de l'arceau pliant (20) correspondants, et les premiers embouts (31) et les deuxièmes embouts (32) comprenant des sections d'insertion (33 et 34) et les logements (35 et 36) pour les éléments de ressort (38) reliant l'arceau de guidage (19) et l'arceau pliant (20), **caractérisé en ce que**
- les logements (35, 36) pour l'élément de ressort (38) sont formés par des ouvertures traversantes en forme de fente (41 et 42) dans lesquelles des sections de support (43 et 44) des éléments de ressort (38) représentés en tant que ressorts à lame (37) sont insérées.

2. Toit selon la revendication 1, **caractérisé en ce que** les sections d'insertion (33 et 34) des embouts (31 et 32) sont introduites dans les sections creuses (39 et 40) de l'arceau de guidage (19) et de l'arceau pliant (20).

3. Toit selon la revendication 1 ou 2, **caractérisé en ce que** les sections creuses (39 et 40) de l'arceau de guidage (19) et de l'arceau pliant (20) et les sections d'insertion (33 et 34) des embouts (31 et 32) présentent des sections transversales (Q1, Q2, Q3 et Q4) correspondantes.

4. Toit selon l'une quelconque des revendications 1 à 3, **caractérisé en ce que** les sections creuses (39 et 40) de l'arceau de guidage (19) et de l'arceau pliant (20) sont de configuration rectangulaire, par exemple carrée.

5. Toit selon la revendication 1, **caractérisé en ce que** les extrémités (45 et 46) de chaque ressort à lame (37) sont pourvues d'élargissements (47 et 48) qui s'appuient contre les embouts (31 et 32).

6. Toit selon l'une quelconque des revendications 1 à 5, **caractérisé en ce que** le premier embout (31) de l'arceau de guidage (19) est pourvu d'un corps de guidage (51) qui agit dans le rail de guidage (22) adjacent dans le cadre latéral de toit (10).

7. Toit selon l'une quelconque ou plusieurs des revendications précédentes, **caractérisé en ce que** la section d'insertion (33) et le corps de guidage (51) du premier embout (31) sont fabriqués à partir d'une pièce.

8. Toit selon l'une quelconque ou plusieurs des revendications précédentes, **caractérisé en ce que** le premier embout (31) et le deuxième embout (32) sont fabriqués à partir de plastique, de métal ou similaire.

9. Toit selon l'une quelconque ou plusieurs des revendications précédentes, **caractérisé en ce que**, pour l'installation du ressort à lame (37) et des embouts (31 et 32) dans l'arceau de guidage (19) et l'arceau pliant (20), ledit ressort à lame (37) est tout d'abord inséré dans les ouvertures traversantes en forme de fente (41 et 42) des embouts (31 et 32) de l'arceau de guidage (19) et de l'arceau pliant (20), et les sections d'insertion (41 et 42) sont ensuite insérées dans l'arceau de guidage (19) et l'arceau pliant (20).

10. Toit selon l'une quelconque ou plusieurs des revendications précédentes, **caractérisé en ce que** l'arceau de guidage (19) et l'arceau pliant (20) sont fabriqués à partir d'acier, de métal léger ou similaire.
